# EUROPÄISCHE PATENTSCHRIFT

(11) **EP 2 129 870 B1**
(45) Veröffentlichungstag und Bekanntmachung des Hinweises auf die Patenterteilung: **24.08.2011**
(21) Anmeldenummer: 08734333.1
(22) Anmeldetag: 28.02.2008
(51) Int. Cl.: F01D 5/28, B23K 1/00, C23C 28/00, C23C 30/00

(54) **VERFAHREN UND VORRICHTUNG ZUM BESCHICHTEN VON BAUTEILEN EINER GASTURBINE**
METHOD AND DEVICE FOR COATING COMPONENTS OF A GAS TURBINE
PROCÉDÉ ET DISPOSITIF POUR REVÊTIR DES PIÈCES D'UNE TURBINE À GAZ

(30) Priorität: 02.03.2007 DE 102007010256
(43) Veröffentlichungstag der Anmeldung: 09.12.2009
(73) Patentinhaber: MTU Aero Engines GmbH, 80995 München (DE)
(72) Erfinder: HANRIEDER, Herbert, 85411 Hohenkammer (DE); GINDORF, Alexander, 85247 Schwabhausen (DE); PAPPERT, Hans, A-6330 Kufstein (AT)
(86) Internationale Anmeldenummer: PCT/DE2008/000353
(87) Internationale Veröffentlichungsnummer: WO 2008/106935

(56) Entgegenhaltungen:
- EP-A- 1 433 870
- DE-A1- 10 326 541
- US-A1- 2003 183 529

## Beschreibung

Die vorliegende Erfindung betrifft ein Verfahren zum Beschichten von Bauteilen einer Gasturbine, insbesondere zur Herstellung einer verschleißfesten temperatur-, oxidations-und/oder korrosionsbeständigen Schutzschicht auf dem Bauteil, wobei die Schutzschicht aus mindestens einer Lötfolie oder Schlickerschicht oder Schlickerschicht besteht, die mittels eines induktiven Hochtemperaturlötverfahrens mit dem entsprechenden Bereich des Bauteils verbunden wird. Die Erfindung betrifft weiterhin eine Vorrichtung zum Beschichten von Bauteilen einer Gasturbine, insbesondere zur Herstellung einer verschleißfesten temperatur-, oxidations- und/oder korrosionsbeständigen Schutzschicht auf dem Bauteil, mit mindestens einem Induktor zur Durchführung eines induktiven Hochtemperaturlötverfahrens zur Erwärmung und Verbindung von mindestens einem Bauteil mit mindestens einer die Schutzschicht ausbildenden Lötfolie oder Schlickerschicht oder Schlickerschicht.

Verschleißfeste Temperatur-, Oxidations- und Korrosionsschutzschichten sind bekannt und werden insbesondere in Teilen von Turbinen- und Triebwerksteilen, insbesondere von Gasturbinen in einem Flugtriebwerk eingesetzt. Schutzschichten mit abrasiven Oberflächen bzw. Eigenschaften sind zum Beispiel aus der US-A-6811898 oder der US-A-5359770 bekannt. Die hierbei beschriebenen Schutzschichten dienen insbesondere zur Beschichtung von Schaufelspitzen einer Turbine, üblicherweise als Schaufelspitzenpanzerung bezeichnet. Zur Herstellung einer derartigen Schaufelspitzenpanzerung ist eine Vielzahl weiterer unterschiedlicher Verfahren bekannt. So beschreibt die DE-C2-4439950 ein Verfahren zum Herstellen einer Schaufelspitzenpanzerung auf einer Schaufel bestehend aus einer Titanbasislegierung. Dabei wird auf die Schaufel ein Lot lagenweise aufgebracht, wobei die Zusammensetzung des Lots an die Zusammensetzung der Schaufel, nämlich der Titanbasislegierung angepasst ist. Auf die mit dem Lot beschichtete Schaufel werden dann Hartstoff-Partikel aufgetragen und in einem anschließenden Aufschmelzvorgang mit dem Lot verbunden. Des Weiteren ist zur Beschichtung von Bauteilen einer Gasturbine auch das Hochtemperaturlöten als Ofenprozess bekannt, wobei dieses Verfahren bei Temperaturen oberhalb 1200 °C bei so genannten Einkristallschaufeln nicht mehr anwendbar ist, da die Gefahr besteht, dass die Einkristallschaufeln rekristallisieren und dadurch ihre Festigkeitseigenschaften verlieren. Des Weiteren ist zur Herstellung von Schaufelspitzenpanzerungen ein Verfahren a us der DE 103 26 541 A1 bekannt, bei dem mittels eines induktiven lokalen Hochtemperaturlötens die zu beschichtende Schaufel induziert und erwärmt wird. Auf die zu beschichtenden Schaufelspitzen wird eine Lötfolie oder Schlickerschicht oder Schlickerschicht mit den gewünschten Schutzschichteigenschaften aufgetragen. Da die Lötfolie oder Schlickerschicht oder Schlickerschicht durch die Induktion nicht direkt erwärmt wird, muss die Temperatur durch Wärmeleitung von der Schaufel bzw. Schaufelspitze auf die Lötfolie oder Schlickerschicht oder Schlickerschicht übertragen werden. Dieser Vorgang ist jedoch technisch unsicher, da beim Aufheizen leichte Verschiebungen oder Abhebungen der Lötfolie oder Schlickerschicht möglich sind, wodurch die Anbindung dieser an das Bauteil verschlechtert wird und insgesamt das Lötergebnis nicht ausreichend ist. Die Leistungsregelung des Induktors ist zudem prozesstechnisch sehr aufwändig.

Es ist daher Aufgabe der vorliegenden Erfindung ein gattungsgemäßes Verfahren zum Beschichten von Bauteilen einer Gasturbine, insbesondere zur Herstellung einer verschleißfesten temperatur-, oxidations- und/oder korrosionsbeständigen Schutzschicht auf dem Bauteil bereitzustellen, bei dem einerseits eine qualitativ hochwertige, sichere und dauerhafte Beschichtung der Bauteile und andererseits eine einfache Prozessregelung sowie hohe Produktionsraten gewährleistet sind.

Es ist weiterhin Aufgabe der vorliegenden Erfindung eine gattungsgemäße Vorrichtung zum Beschichten von Bauteilen einer Gasturbine, insbesondere zur Herstellung einer verschleißfesten temperatur-, oxidations- und/oder korrosionsbeständigen Schutzschicht auf dem Bauteil bereitzustellen, die einerseits eine qualitativ hochwertige, sichere und dauerhafte Beschichtung der Bauteile und andererseits eine einfache Prozessregelung sowie hohe Produktionsraten gewährleistet.

Gelöst werden diese Aufgaben durch ein Verfahren gemäß den Merkmalen des Anspruchs 1 sowie eine Vorrichtung gemäß den Merkmalen des Anspruchs 16.

Vorteilhafte Ausgestaltungen der Erfindung sind in den jeweiligen Unteransprüchen beschrieben.

Ein erfindungsgemäßes Verfahren zum Beschichten von Bauteilen einer Gasturbine, insbesondere zur Herstellung einer verschleißfesten temperatur-, oxidations- und/oder korrosionsbeständigen Schutzschicht auf dem Bauteil, wobei die Schutzschicht aus mindestens einer Lötfolie oder Schlickerschicht besteht und die mittels eines induktiven Hochtemperaturlötverfahrens mit dem entsprechenden Bereich des Bauteils verbunden wird, zeichnet sich erfindungsgemäß dadurch aus, dass die stoffschlüssige Verbindung zwischen dem Bauteil und der auf dem Bauteil angeordneten Lötfolie oder Schlickerschicht durch ein lokales Erwärmen des Bauteils im Bereich der aufzutragenden Lötfolie oder Schlickerschicht und ein zeitgleiches Erwärmen der Lötfolie oder Schlickerschicht mittels einer von mindestens einem massiv ausgebildeten Induktionsverstärker aufgenommenen und abgegebenen Wärmeenergie erfolgt, wobei der Induktionsverstärker zwischen dem Induktor und dem Bauteil im Bereich der Lötfolie oder Schlickerschicht angeordnet ist. Durch die Verwendung des Induktionsverstärkers innerhalb des Induktors ist es vorteilhafterweise möglich, dass der Temperatureintrag in die Lötfolie oder Schlickerschicht beeinflusst und so gesteuert werden kann, dass konstante Temperaturbedingungen in dem zu beschichtenden Bauteil und in der Lötfolie oder Schlickerschicht herrschen. Damit ist die Herstellung einer qualitativ hochwertigen, sicheren und dauerhaften Beschichtung von Bauteilen einer Gasturbine gewährleistet. Dabei kann die Erwärmung der Lötfolie oder Schlickerschicht durch die vom Induktionsverstärker abgegebene Strahlungswärme erfolgen. Es ist aber auch möglich, dass die Erwärmung der Lötfolie oder Schlickerschicht durch die direkte Einkopplung von der im Induktionsverstärker erzeugten Wärmeenergie erfolgt.

In einer vorteilhaften Ausgestaltung des erfindungsgemäßen Verfahrens ist der Induktionsverstärker von der Lötfolie oder Schlickerschicht beabstandet. Zudem ist es möglich, dass der Abstand zwischen den Bauteilen mit der Lötfolie oder Schlickerschicht und dem Induktionsverstärker und/oder die Position des Bauteils mit der Lötfolie oder Schlickerschicht innerhalb des Induktors zur Regulierung der Temperatur in dem zu beschichtenden Bereich des Bauteils und der Lötfolie oder Schlickerschicht regel- und steuerbar ist. Dadurch kann auf eine separate Leistungsregelung für den Temperatureintrag in das zu beschichtende Bauteil und die Lötfolie oder Schlickerschicht verzichtet werden. Erfindungsgemäß wird die Temperatur des zu beschichtenden Bauteils und der Lötfolie oder Schlickerschicht durch die Lage des Bauteils innerhalb der Spule und den Abstand zum Induktionsverstärker so eingestellt, dass optimale Lötbedingungen herrschen. Damit ist erfindungsgemäß ein Parallelbetrieb des Beschichtungsprozesses mit mehreren Induktoren möglich, wobei die Induktoren mit einem Generator verbunden sein können. Gemäß einer weiteren Ausgestaltung des erfindungsgemäßen Verfahrens ist es möglich, dass eine Regulierung der Temperatur in dem Bauteil und der Lötfolie oder Schlickerschicht mittels einer geeigneten Auswahl der Größe des Induktionsverstärkers erfolgt. Insgesamt ergibt sich vorteilhafterweise eine Vereinfachung der Prozessregelung, da die Temperatur nicht mehr über eine Generatorleistung, sondern über die Position des Bauteils innerhalb des Induktors und/oder über den Abstand des Bauteils mit der Lötfolie oder Schlickerschicht von dem Induktionsverstärker und/oder die geeignete Auswahl der Größe des Induktionsverstärkers eingestellt werden kann. Im Serienbetrieb können diese Anordnungen auf mehrere Induktoren parallel angewandt werden, um die Effizienz des Beschichtungsprozesses zu erhöhen. Der Abstand zwischen dem Bauteil mit der Lötfolie oder Schlickerschicht und dem Induktionsverstärker beträgt üblicherweise 0,5 bis 4,5 mm, vorzugsweise 1,0 bis 3,0 mm.

In einer weiteren vorteilhaften Ausgestaltung des erfindungsgemäßen Verfahrens ist es zudem möglich, dass die Regulierung der Temperatur in dem Bauteil und der Lötfolie oder Schlickerschicht mittels Regulierung der Leistung und/oder der Frequenz des Induktors erfolgt. Dabei kann der Induktor mit einer Frequenz zwischen 50 und 700 kHz, vorzugsweise 100 und 600 kHz betrieben werden. Bei einigen Anwendungsbereichen kann diese zusätzliche Leistungsregulierung vorteilhaft sein, auch wenn dies zu einer komplexeren Prozessregelung führt.

Gemäß einer weiteren vorteilhaften Ausgestaltung des erfindungsgemäßen Verfahrens besteht die Lötfolie oder Schlickerschicht aus einem Lot, einem Bindemittel und Hartstoff-Partikeln. Das Lot kann dabei aus einem eutektischen Lot, dessen Legierung mindestens einen Basiswerkstoff des zu beschichtenden Bauteils aufweist, bestehen. Dadurch ist vorteilhafterweise eine hervorragende Verträglichkeit des Lots mit dem Basiswerkstoff des zu beschichtenden Bauteils gewährleistet. Die Verträglichkeit bezieht sich dabei insbesondere auf den thermischen Ausdehnungskoeffizienten des Bauteils und der Lötfolie oder Schlickerschicht bzw. Schutzschicht als auch auf die Haftfähigkeit des Lots auf dem Bauteil. Das Lot kann dabei aus einer MCrAlY-Matrix oder MCrAIXAE-Matrix mit M = Fe, Co, Ni, NiCo oder CoNi, X = Si, Ta, V, Nb, Pt, Pd und AE = Y, Ti, Hf, Zr, Yb bestehen. Die Hartstoff-Partikel können dabei insbesondere aus (kubischem) Bornitrid, Keramik, Titankarbid, Wolframkarbid, Chromkarbid, Aluminiumoxid oder Zirkonoxid oder einer Mischung davon bestehen. Das Bindemittel der Lötfolie oder Schlickerschicht kann aus Kunststoff oder anderen organischen Materialien bestehen. Üblicherweise verdampft das Bindemittel bei der Erwärmung der Lötfolie oder Schlickerschicht und dem entsprechenden Verbinden mit dem Bauteil. Insgesamt ergibt sich dadurch eine verschleißfeste, temperatur-, oxidations- und korrosionsbeständige abrasive Schutzschicht, die insbesondere zum Auftrag auf eine Schaufelspitze einer Turbinenschaufel geeignet ist. Die Schutzschicht kann dabei eine Dicke von 10 µm bis 6,0 mm, insbesondere 30 µm bis 300 µm aufweisen. Die Hartstoff-Partikel können eine Partikelgröße von 0,1 µm bis 200 µm aufweisen.

Eine erfindungsgemäße Vorrichtung zum Beschichten von Bauteilen einer Gasturbine, insbesondere zur Herstellung einer verschleißfesten temperatur-, oxidations- und/oder korrosionsbeständigen Schutzschicht auf dem Bauteil weist mindestens einen Induktor zur Durchführung eines induktiven Hochtemperaturlötverfahrens zur Erwärmung und Verbindung von mindestens einem Bauteil mit mindestens einer die Schutzschicht ausbildenden Lötfolie oder Schlickerschicht auf. Erfindungsgemäß ist zwischen dem Induktor und dem Bauteil mit der Lötfolie oder Schlickerschicht mindestens ein Induktionsverstärker im Bereich der Lötfolie oder Schlickerschicht angeordnet. Dadurch ist es vorteilhafterweise möglich, dass ein zeitgleiches lokales Erwärmen des Bauteils im Bereich der aufzutragenden Lötfolie oder Schlickerschicht und ein Erwärmen der Lötfolie oder Schlickerschicht selbst mittels der von dem Induktionsverstärker aufgenommenen und abgegebenen Wärmeenergie erfolgt. Mittels des Induktionsverstärkers kann zudem der Temperatureintrag in die Lötfolie oder Schlickerschicht und das Bauteil beeinflusst und so gesteuert werden, dass konstante Temperaturbedingungen in dem zu beschichtenden Bauteil und in der Lötfolie oder Schlickerschicht herrschen. Die Vorrichtung eignet sich damit für die Herstellung einer qualitativ hochwertigen, sicheren und dauerhaften Beschichtung von Bauteilen einer Gasturbine. Die Erwärmung der Lötfolie oder Schlickerschicht erfolgt dabei durch die vom Induktionsverstärker abgegebene Strahlungswärme und/oder durch eine direkte Einkopplung der im Induktionsverstärker erzeugten Wärmeenergie in die Lötfolie oder Schlickerschicht.

In einer vorteilhaften Ausgestaltung der erfindungsgemäßen Vorrichtung besteht der Induktionsverstärker aus Titan, einer Titanlegierung, SiC oder Graphit. Auch andere geeignete Materialien sind denkbar. Der Induktionsverstärker ist dabei massiv ausgebildet. Es ist aber auch möglich, dass der Induktionsverstärker aus einer Vielzahl von Partikeln ausgebildet ist. Zudem kann die Form des Induktionsverstärkers zumindest teilweise der Form des dem Bauteil zugewandten Bereichs des Induktors angepasst sein. Es ist weiterhin möglich, dass die Form des Induktionsverstärkers an einem dem Bauteil zugewandten Bereich zumindest teilweise der Form des Bauteils in diesem Bereich entspricht. Durch die geschilderten Maßnahmen wird der Wärmeeintrag in die Lötfolie oder Schlickerschicht wie auch dem Bereich des damit zu beschichtenden Bauteils optimiert, d. h. es erfolgt eine homogene Erwärmung der entsprechenden Bereiche.

Der Induktor kann zudem als doppelwindige Spule ausgebildet sein. Aber auch andere Ausgestaltungen sind denkbar.

In einer weiteren vorteilhaften Ausgestaltung der erfindungsgemäßen Vorrichtung ist der Abstand zwischen dem Bauteil mit der Lötfolie oder Schlickerschicht und dem Induktionsverstärker und/oder die Position des Bauteils mit der Lötfolie oder Schlickerschicht innerhalb des Induktors zur Regulierung der Temperatur in dem zu beschichtenden Bereich des Bauteils und der Lötfolie oder Schlickerschicht mittels einer Steuervorrichtung regel- und steuerbar. Der Abstand kann dabei 0,5 bis 4,5 mm, vorzugsweise 1,0 bis 3,0 mm betragen. Dadurch ergibt sich vorteilhafterweise eine Vereinfachung der Prozessregelung, da die Temperatur in der Lötfolie oder Schlickerschicht und an dem entsprechenden Bereich des Bauteils nicht mehr über eine Generatorleistung, sondern über die Position des Bauteils innerhalb des Induktors und/oder über den Abstand des Bauteils mit der Lötfolie oder Schlickerschicht von dem Induktionsverstärker eingestellt werden kann. Gemäß einer weiteren vorteilhaften Ausgestaltung der Erfindung ist es somit möglich, dass mehrere Induktoren mit jeweils mindestens einem Induktionsverstärker mit einem Generator verbunden sind. Dadurch lässt sich die Effizienz des Beschichtungsprozesses deutlich erhöhen, die im Vorhergehenden beschriebenen Anordnungen der Induktionsverstärker können im Serienbetrieb auf mehrere Induktoren parallel angewandt werden.

In einer weiteren vorteilhaften Ausgestaltung der erfindungsgemäßen Vorrichtung ist es zudem möglich, dass die Vorrichtung eine Regelvorrichtung zur Regulierung der Leistung und/oder der Frequenz des Induktors aufweist. Der Induktor kann dabei mit einer Frequenz zwischen 50 und 700 kHz, vorzugsweise 100 und 600 kHz betrieben werden. Bei einigen Anwendungsbereichen kann diese zusätzliche Leistungsregulierung vorteilhaft sein, auch wenn dies zu einer komplexeren Prozessregelung führt.

Gemäß einer vorteilhaften Ausgestaltung der Vorrichtung besteht die Lötfolie oder Schlickerschicht aus einem Lot, einem Bindemittel und Hartstoff-Partikeln.

In einer weiteren vorteilhaften Ausgestaltung der erfindungsgemäßen Vorrichtung besteht das Lot aus einem eutektischen Lot, dessen Legierung mindestens einen Basiswerkstoff des zu beschichtenden Bauteils aufweist. Dadurch ist vorteilhafterweise eine hervorragende Verträglichkeit des Lots mit dem Basiswerkstoff des zu beschichtenden Bauteils - wie im Vorhergehenden bereits beschrieben - gewährleistet. Das Lot kann dabei aus einer MCrAlY-Matrix oder MCrAlXAE-Matrix mit M = Fe, Co, Ni, NiCo oder CoNi, X = Si, Ta, V, Nb, Pt, Pd und AE = Y, Ti, Hf, Zr, Yb bestehen. Die Hartstoff-Partikel können insbesondere aus (kubischem) Bornitrid, Keramik, Titankarbid, Wolframkarbid, Chromkarbid oder Zirkonoxid oder einer Mischung davon bestehen.

Das Bindemittel der Lötfolie oder Schlickerschicht kann aus Kunststoff oder anderen organischen Materialien - wie bereits im Vorhergehenden beschrieben - bestehen.

Insbesondere eignet sich die erfindungsgemäße Vorrichtung zur Herstellung einer Schaufelspitzenpanzerung einer Schaufelspitze einer Turbinenschaufel. Insbesondere kann das Bauteil eine Schaufelspitze einer Turbinenschaufel einer Gasturbine eines Flugtriebwerks sein.

Verwendung findet das im Vorhergehenden beschriebene erfindungsgemäße Verfahren und die im Vorhergehenden beschriebene erfindungsgemäße Vorrichtung beim Aufbringen einer hochtemperatur-, oxidations- und korrosionsbeständigen Schutzschicht auf Turbinenund Triebwerksteilen, insbesondere von Gasturbinen in einem Flugtriebwerk.

Gemäß einer weiteren vorteilhaften Verwendung des im Vorhergehenden beschriebenen erfindungsgemäßen Verfahrens und der im Vorhergehenden beschriebenen erfindungsgemäßen Vorrichtung können diese zur Ausbesserung einer hochtemperatur-, oxidations- und korrosionsbeständigen Schutzschicht von Turbinen- und Triebwerksteilen, insbesondere von Gasturbinen in einem Flugtriebwerk angewandt werden.

## Patentansprüche

1. Verfahren zum Beschichten von Bauteilen einer Gasturbine, insbesondere zur Herstellung einer verschleißfesten temperature-, oxidations- und/oder korrosionsbeständigen Schutzschicht auf dem Bauteil, wobei die Schutzschicht aus mindestens einer Lötfolie oder Schlickerschicht besteht, die mittels eines induktiven Hochtemperaturlötverfahrens mit dem entsprechenden Bereich des Bauteils verbunden wird, **dadurch gekennzeichnet, dass** die stoffschlüssige Verbindung zwischen dem Bauteil und der auf dem Bauteil angeordneten Lötfolie oder Schlickerschicht durch ein lokales Erwärmen des Bauteils im Bereich der aufzutragenden Lötfolie oder Schlickerschicht und ein zeitgleiches Erwärmen der Lötfolie oder Schlickerschicht mittels einer von mindestens einem massiv ausgebildeten Induktionsverstärker aufgenommen und abgegebenen Wärmeenergie erfolgt, wobei der Induktionsverstärker zwischen dem Induktor und dem Bauteil im Bereich der Lötfolie oder Schlickerschicht angeordnet ist.

2. Verfahren nach Anspruch 1, **dadurch gekennzeichnet, dass** die Erwärmung der Lötfolie oder Schlickerschicht durch die vom Induktionsverstärker abgegebene Strahlungswärme erfolgt.

3. Verfahren nach Anspruch 1 oder 2, **dadurch gekennzeichnet, dass** die Erwärmung der Lötfolie oder Schlickerschicht durch direkte Einkopplung von der im Induktionsverstärker erzeugten Wärmeenergie erfolgt.

4. Verfahren nach einem der vorhergehenden Ansprüche, **dadurch gekennzeichnet, dass** der Induktionsverstärker von der Lötfolie oder Schlickerschicht beabstandet ist.

5. Verfahren nach einem der vorhergehenden Ansprüche, **dadurch gekennzeichnet, dass** der Abstand zwischen dem Bauteil mit der Lötfolie oder Schlickerschicht und dem Induktionsverstärker und/oder die Position des Bauteils mit der Lötfolie oder Schlickerschicht innerhalb des Induktors zur Regulierung der Temperatur in dem zu beschichtenden Bereich des Bauteils und der Lötfolie oder Schlickerschicht regel- und steuerbar ist.

6. Verfahren nach Anspruch 5, **dadurch gekennzeichnet, dass** der Abstand 0,5 bis 4,5 mm, vorzugsweise 1,0 bis 3,0 mm beträgt.

7. Verfahren nach einem der vorhergehenden Absprüche, **dadurch gekennzeichnet, dass** eine Regulierung der Temperatur in dem Bauteil und der Lötfolie oder Schlickerschicht mittels Regulierung der Leistung und/oder der Frequenz des Induktors erfolgt.

8. Verfahren nach einem der vorhergehenden Ansprüche, **dadurch gekennzeichnet, dass** der Induktor mit einer Frequenz zwischen 50 und 700 kHz, vorzugsweise 100 und 600 kHz betrieben wird.

9. Verfahren nach einem der vorhergehenden Ansprüche, **dadurch gekennzeichnet, dass** das Bauteil eine Schaufelspitze einer Turbinenschaufel ist.

10. Vorrichtung zum Beschichten von Bauteilen einer Gasturbine, insbesondere zur Herstellung einer verschleißfesten temperatur-, oxidations- und/oder korrosionsbeständigen Schutzschicht auf dem Bauteil, mit mindestens einem Induktor zur Durchführung eines induktiven Hochtemperaturlötverfahrens zur Erwärmung und Verbindung von mindestens einem Bauteil mit mindestens einer die Schutzschicht ausbildenden Lötfolie oder Schlickerschicht, **dadurch gekennzeichnet, dass** zwischen dem Induktor und dem Bauteil mit der Lötfolie oder Schlickerschicht mindestens ein Induktionsverstärker im Bereich der Lötfolie oder Schlickerschicht angeordnet ist.

11. Vorrichtung nach Anspruch 10, **dadurch gekennzeichnet, dass** der Induktionsverstärker aus Titan, einer Titanlegierung, SiC oder Graphit besteht.

12. Vorrichtung nach einem der Ansprüche 10 bis 11, **dadurch gekennzeichnet, dass** die Form des Induktionsverstärkers zumindest teilweise der Form des dem Bauteil zugewandten Bereichs des Induktors angepasst ist.

13. Vorrichtung nach einem der Ansprüche 10 bis 12, **dadurch gekennzeichnet, dass** die Form des Induktionsverstärkers an einem dem Bauteil zugewandten Bereich zumindest teilweise der Form des Bauteils in diesem Bereich entspricht.

## Claims

1. Method for coating components of a gas turbine, in particular for producing a wear-resistant temperature-, oxidation- and/or corrosion-proof protective layer on the component, wherein the protective layer consists of at least one soldering foil or slip layer that is connected to the corresponding region of the component by means of an inductive high-temperature soldering process, **characterised in that** the material connection between the component and the soldering foil or slip layer arranged on the component is effected by locally heating the component in the region of the soldering foil or slip layer to be applied and simultaneously heating the soldering foil or slip layer by means of thermal energy that is absorbed and emitted by at least one solidly formed induction amplifier, wherein the induction amplifier is arranged between the inductor and the component in the region of the soldering foil or slip layer.

2. Method according to claim 1, **characterised in that** the heating of the soldiering foil or slip layer is effected by the radiant heat emitted by the induction amplifier.

3. Method according to claim 1 or 2, **characterised in that** the heating of the soldering foil or slip layer is effected by directly coupling in the thermal energy that is generated in the induction amplifier.

4. Method according to one of the preceding claims, **characterised in that** the induction amplifier is spaced apart from the soldering foil or slip layer.

5. Method according to one of the preceding claims, **characterised in that** the spacing between the component with the soldering foil or slip layer and the induction amplifier and/or the position of the component with the soldering foil or slip layer inside the inductor can be regulated and controlled in order to regulate the temperature in the region of the component to be coated and of the soldering foil or slip layer.

6. Method according to claim 5, **characterised in that** the spacing amounts to 0.5 to 4.5 mm, preferably to 1.0 to 3.0 mm.

7. Method according to one of the preceding claims, **characterised in that** regulation of the temperature in the component and the soldering foil or slip layer is effected by regulating the output and/or the frequency of the inductor.

8. Method according to one of the preceding claims, **characterised in that** the inductor is operated at a frequency between 50 and 700 kHz, preferably 100 and 600 kHz.

9. Method according to one of the preceding claims, **characterised in that** the component is a blade tip of a turbine blade.

10. A device for coating components of a gas turbine, in particular for producing a wear-resistant temperature-, oxidation- and/or corrosion-proof protective layer on the component, having at least one inductor for carrying out an inductive high-temperature soldering process for heating and connecting at least one component with at least one soldering foil or slip layer forming the protective layer, **characterised in that** between the inductor and the component with the soldering foil or slip layer at least one induction amplifier is arranged in the region of the soldering foil or slip layer.

11. A device according to claim 10, **characterised in that** the inductor amplifier consists of titanium, a titanium alloy, SiC or graphite.

12. A device according to one of claims 10 to 11, **characterised in that** the form of the induction amplifier is adapted at least in part to the form of the region of the inductor that faces the component.

13. A device according to one of claims 10 to 12, **characterised in that** the form of the induction amplifier in a region facing the component corresponds at least in part to the form of the component in this region.

## Revendications

1. Procédé pour revêtir des pièces d'une turbine à gaz, en particulier pour produire une couche de protection résistant à l'usure et résistant à la température, à l'oxydation et/ou à la corrosion sur la pièce, dans lequel la couche de protection se compose d'au moins une feuille de brasage ou d'une couche de barbotine, qui est assemblée à la zone correspondante de la pièce au moyen d'un procédé de brasage à haute température par induction, **caractérisé en ce que** l'on effectue l'assemblage par continuité de matière entre la pièce et la feuille de brasage ou la couche de barbotine disposée sur la pièce par un chauffage local de la pièce dans la zone de la feuille de brasage ou de la couche de barbotine à appliquer et un chauffage simultané de la feuille de brasage ou de la couche de barbotine au moyen d'une énergie thermique captée et cédée par au moins un amplificateur d'induction de forme massive, dans lequel l'amplificateur d'induction est disposé dans la zone de la feuille de brasage ou de la couche de barbotine entre l'inducteur et la pièce.

2. Procédé selon la revendication 1, **caractérisé en ce que** l'on effectue le chauffage de la feuille de brasage ou de la couche de barbotine au moyen de la chaleur rayonnante cédée par l'amplificateur d'induction.

3. Procédé selon la revendication 1 ou 2, **caractérisé en ce que** l'on effectue le chauffage de la feuille de brasage ou de la couche de barbotine par un couplage direct de l'énergie thermique dans l'amplificateur d'induction.

4. Procédé selon l'une quelconque des revendications précédentes, **caractérisé en ce que** l'amplificateur d'induction est espacé de la feuille de brasage ou de la couche de barbotine.

5. Procédé selon l'une quelconque des revendications précédentes, **caractérisé en ce que** la distance entre la pièce avec la feuille de brasage ou la couche de barbotine et l'amplificateur d'induction et/ou la position de la pièce avec la feuille de brasage ou la couche de barbotine à l'intérieur de l'amplificateur d'induction peut être régulée et commandée pour la régulation de la température dans la zone à revêtir de la pièce et de la feuille de brasage ou de la couche de barbotine.

6. Procédé selon la revendication 5, **caractérisé en ce que** la distance vaut 0,5 à 4,5 mm, de préférence 1,0 à 3,0 mm.

7. Procédé selon l'une quelconque des revendications précédentes, **caractérisé en ce que** l'on opère une régulation de la température dans la pièce et dans la feuille de brasage ou dans la couche de barbotine au moyen d'une régulation de la puissance et/ou de la fréquence de l'inducteur.

8. Procédé selon l'une quelconque des revendications précédentes, **caractérisé en ce que** l'on fait fonctionner l'inducteur avec une fréquence comprise entre 50 et 700 kHz, de préférence entre 100 et 600 kHz.

9. Procédé selon l'une quelconque des revendications précédentes, **caractérisé en ce que** la pièce est une pointe d'aube d'une aube de turbine.

10. Dispositif pour revêtir des pièces d'une turbine à gaz, en particulier pour fabriquer une couche de protection résistant à l'usure et résistant à la température, à l'oxydation et/ou à la corrosion sur la pièce, avec au moins un inducteur destiné à exécuter un procédé de brasage à haute température par induction en vue du chauffage et de l'assemblage d'au moins une pièce avec au moins une feuille de brasage ou une couche de barbotine formant la couche de protection, **caractérisé en ce qu'**au moins un amplificateur d'induction est disposé dans la zone de la feuille de brasage ou de la couche de barbotine, entre l'inducteur et la pièce avec la feuille de brasage ou la couche de barbotine.

11. Dispositif selon la revendication 10, **caractérisé en ce que** l'amplificateur d'induction se compose de titane, d'un alliage de titane, de SiC ou de graphite.

12. Dispositif selon l'une quelconque des revendications 10 ou 11, **caractérisé en ce que** la forme de l'amplificateur d'induction est adaptée au moins partiellement à la forme de la zone de l'inducteur tournée vers la pièce.

13. Dispositif selon l'une quelconque des revendications 10 à 12, **caractérisé en ce que** la forme de l'amplificateur d'induction dans une zone tournée vers la pièce correspond au moins partiellement à la forme de la pièce dans cette zone.
